# EUROPÄISCHE PATENTSCHRIFT

(11) **EP 0 722 911 B1**
(45) Veröffentlichungstag und Bekanntmachung des Hinweises auf die Patenterteilung: **19.08.1998**
(21) Anmeldenummer: 96100193.0
(22) Anmeldetag: 09.01.1996
(51) Int. Cl.: C03C 17/00, C03C 17/30

(54) **Verfahren zur Verminderung der Bleilässigkeit von Bleikristallglas**
Process for decreasing lead migration from lead crystal glass
Procédé de réduction de la migration de plomb de verre cristal

(30) Priorität: 16.01.1995 DE 19501092
(43) Veröffentlichungstag der Anmeldung: 24.07.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: Kron, Johanna, Dr., D-97299 Zell (DE); Schottner, Gerhard, Dr., D-91560 Heilsbronn (DE); Deichmann, Karl Joachim, Dipl.-Ing., D-97084 Würzburg (DE)

(56) Entgegenhaltungen:
- EP-A- 0 471 301
- EP-A- 0 562 283
- EP-A- 0 621 246
- DE-A- 4 303 570

## Beschreibung

Bleikristallglas gilt insbesondere wegen seiner brillanten Optik als besonders wertvoll. Die für die hohe Brillanz erforderliche Licht- Brechzahl (n_{D}) wird vor allem durch hohe Bleioxidgehalte erreicht. So enthält Preßbleikristallglas mit n_{D} > 1,520 mindestens 18% PbO, Bleikristallglas mit n_{D} > 1,545 mindestens 24% PbO und Hochbleikristall mit n_{D} > 1,545 mindestens 30% PbO.

Diese hohen PbO-Gehalte sind jedoch dann nachteilig, wenn das Bleikristallglas als Lebensmittelbedarfsgegenstand eingesetzt wird. Es hat sich nämlich gezeigt, daß insbesondere bei verschiedenen Getränken, z.B. Säften, Wein oder Spirituosen, vor allem bei längerer Standzeit, das Bleioxid aus dem Bleikristallkaraffen oder Bleikristallgläsern herausgelöst wird. Es hat deshalb nicht an Versuchen gefehlt, diese Bleilässigkeit zu unterdrücken. Ein Lösungsweg schlägt vor, das Auslösen von Blei durch eine Säurepolitur der Glasoberfläche zu reduzieren (interne Mitteilung Fa. Nachtmann). Dadurch kann eine Reduzierung der Bleilässigkeit gegenüber unbehandelten Bleikristallglasflächen erreicht werden. Eine weitere Methode schlägt eine Ammoniumsulfat-Behandlung vor. Mit kommerziellen Silikon-Systemen (Acephob-Beschichtung) ist ebenfalls eine Reduzierung der Bleilässigkeit bis ca. 10 mg Pb/l möglich. Aber auch mit diesem Verfahren ist es nicht möglich, die insbesondere nach den strengen Umweltschutzbestimmungen in den Vereinigten Staaten geltenden Vorschriften (Kalifornien, Proposition 65) zu erfüllen, die eine wesentlich höhere Reduzierung der Bleilässigkeit erfordern.

Ausgehend hiervon, ist es die Aufgabe der vorliegenden Erfindung ein Verfahren zur Reduzierung der Bleilässigkeit vorzuschlagen, das eine gegenüber dem Stand der Technik deutlich verringerte Bleiabgabe zur Folge hat.

Die Aufgabe wird durch die kennzeichnenden Merkmale des Anspruches 1 gelöst. Die Unteransprüche zeigen vorteilhafte Weiterbildungen auf.

Erfindungsgemäß wird somit vorgeschlagen, Bleikristallglas, das als Lebensmittelbedarfsgegenstand eingesetzt wird, mit einer Beschichtung zu versehen, die durch Aufbringung und Aushärtung eines Beschichtungsmaterials, enthaltend ein hydrolytisches Kondensationsprodukt eines vernetzbaren organo-funktionellen Silans, einer Metallverbindung und einem mit diesem hydrolytischen Kondensat vernetzbaren organischen Prepolymer, entsteht. Ein derartiges Beschichtungsmaterial und ein diesbezügliches Verfahren zur Herstellung des Beschichtungsmaterials ist aus der EP-A-471.303 (auch für Bleikristallglas) und aus der DE 43 03 570 A1 bekannt. Das erfindungsgemäße Verfahren ist grundsätzlich mit allen in diesen Dokumenten angeführten Komponenten (vernetzbares organo-funktionelles Silan, Metallverbindungen, organisches Prepolymer) ausführbar. Auf den Offenbarungsgehalt dieses Dokumentes wird deshalb ausdrücklich bezug genommen. Besonders bevorzugt ist es jedoch, wenn als organo-funktionelles Silan Phenyltrimethoxysilan, 3-Glycidyloxypropyltrimethoxysilan und/oder Aminopropyltriethoxysilan eingesetzt wird. Bei den Metallverbindungen ist Aluminiumsekundärbutylat und bei dem vernetzbaren organischen Prepolymer Epoxidharz bevorzugt.

Es hat sich nun überraschenderweise gezeigt, daß Bleikristallglasgegenstände, die mit einer vorstehend beschriebenen Beschichtung versehen sind, eine gegenüber dem Stand der Technik deutlich reduzierte Bleilässigkeit aufweisen. Wie bereits eingangs geschildert, war bisher im Stand der Technik lediglich mit der Acephop-Beschichtung maximal eine Bleilässigkeit von 10 mg Blei / l möglich. Mit dem erfindungsgemäßen Verfahren ist nun eine Reduzierung um das fünffache (Bleilässigkeit 0,002 mg Blei/l) erreichbar. Dieses Ergebnis war für den Fachmann auch in Kenntnis der EP-A-471 303 und DE 43 03 570 überraschend, da die vorstehend erwähnten Dokumenten lediglich die Herstellung von spülmaschinenbeständigen Beschichtungen schildert. Der Fachmann konnte daraus keine derart überlegene Barrierewirkung speziell gegen Pb0 ableiten. Es hat sich gezeigt, daß die auf den Bleikristallglasgegenständen aufgebrachten Beschichtungen jedoch nicht nur eine gegenüber dem Stand der Technik deutlich reduzierte Bleilässigkeit aufweisen, sondern daß diese Schichten zusätzlich eine sehr glatte und glänzende Oberfläche sowie eine sehr gute Primärhaftung auf den Bleikristallglasoberflächen zeigen. Auch dies war für einen Fachmann überraschend und nicht zu erwarten. Die erfindungsgemäß aufgebrachten Schichten auf den Bleikristallglasoberflächen zeichnen sich weiter durch eine sehr gute Abriebbeständigkeit und eine hervorragende Ritzhärte aus. Dies führt unter anderem auch dazu, daß die Beschichtungen selbst nach ca. 100 Spülungen in einer Spülmaschine noch eine weitgehende Erhaltung ihrer Barrierewirkung zeigen, wohingegen die Beschichtung des Standes der Technik bereits nach 10 bis 15 Spülungen ihre Barrierewirkung weitgehend verlieren.

Das Aufbringen des Beschichtungsmaterials kann grundsätzlich mit allen aus dem Stand der Technik bekannten Methoden erfolgen. Bevorzugt ist es dabei, wenn das Beschichtungsmaterial mittels Sprühen aufgebracht wird. Die Innenbeschichtung der Bleikristallgläser kann dann z.B. mit Rundläufer mit Hilfe einer Sprühlanzette durchgeführt werden. Die Temperaturen zur Aushärtung des aufgebrachten Beschichtungsmaterials richten sich nach den ausgewählten Komponenten gemäß der DE 43 03 570. Die Temperaturen zur Aushärtung liegen im allgemeinen in Bereichen von 100 bis 250° C.

Die Erfindung wird nachfolgend anhand von Beispielen und ausführlichen Testmethoden näher erläutert.

### Beispiel

17,8 g Phenyltrimethoxysilan, 138,3 g 3-Glycidyloxypropyltrimethoxysilan und 9.9 g Aminopropyltriethoxysilan werden in einem 3-Halskolben unter Eiskühlung miteinander vermischt. 44,33 g Aluminiumsekundärbutylat werden mit 23,4 g Acetessigester versetzt und zur Reaktionsmischung gegeben. Nach Zugabe von 3 g und dann 6 g gestilliertem Wasser wird jeweils 15 min unter Eiskühlung gerührt. Dann werden nochmals 48,6 g Wasser zugesetzt und 2 h bei Raumtemperatur weitergerührt.

Zur Mischung werden jetzt 26,79 g Epoxidharz und 0,54 g eines Verlaufsmittels gegeben. Durch übliche Lacklösemittel wird die Viskosität der Mischung auf ca. 10 m Pa·s eingestellt.

Das so erhaltene Beschichtungsmaterial läßt sich sehr gut im Sprühauftrag verarbeiten. Die Innenbeschichtung erfolgte auf einem Rundläufer mit Hilfe einer Sprühlanzette (Düse 0,5 mm Rundstrahl, Sprühwinkel 45°C).

Die so aufgebrachte Beschichtung hatte eine Schichtdicke von 10 µm und wurde bei 160° C ausgehärtet.

Die Beschichtungen wurden mit den folgenden Testmethoden nach ihrer Haftung, Härte, Abriebbeständigkeit, Spülmaschinenfestigkeit sowie nach ihrer Beständigkeit nach UV-Belastung bewertet:

### Beurteilung der Haftung zum Substrat

Die Haftfestigkeit der Beschichtungen zum Untergrund wurde nach zwei verschiedenen Verfahren getestet:

### a) Tesafilm-Abrißtest

Ein Streifen eines handelsüblichen Tesafilms (Fa. Baiersdorf AG, Hamburg) wird an einer unbeschädigten Stelle des Lackfilms aufgebracht, luftblasenfrei festgedrückt und dann unter einem Winkel von 90° ruckartig abgezogen. Sowohl der Tesastreifen als auch die so behandelte Lackoberfläche wird auf vorhandenes bzw. abgezogenes Beschichtungsmaterial untersucht. Diese Methode erlaubt die Ermittlung offensichtlicher Haftungsmängel.

### b) Tape Test (ASTM D 3359)

Der Tape Test ist eine einfache empirische Prüfung zur Beurteilung der Haftung von Lacken zum Untergrund. Ferner können die Sprödigkeit und andere Festigkeitseigenschaften des Lackes beurteilt werden. Hierzu wird mit einem Mehrschneidengerät (Schnittbreite = 5 mm, Schneidenabstand = 1 mm) ein bis auf den Untergrund durchgehendes Schnittmuster mit sechs Schnitten gezogen, so daß ein Gitter mit 25 Quadraten entsteht. Anschließend wird ein Streifen eines handelsüblichen Tesafilms auf der Schnittstelle angebracht und schnell unter einem Winkel von 90° abgezogen. Durch mikroskopische Betrachtung der Quadrate und ihren Vergleich mit Referenzbildern werden Tape Test-Kennwerte von B 5 bis B 0 erhalten.

| **Tape Test Kennwerte** | **Beschreibung** |
|---|---|
| B 5 | Die Schnittränder sind vollkommen glatt, kein Teilstück des Anstriches ist abgeplatzt. |
| B 4 | An den Schnittpunkten der Gitterlinien sind kleine Splitter des Anstriches abgeplatzt; abgeplatzte Fläche etwa 5% der Teilstücke. |
| B 3 | Der Anstrich ist längs der Schnittränder und/oder an den Schnittpunkten der Gitterlinien abgeplatzt; abgeplatzte Fläche etwa 15% der Teilstücke. |
| B 2 | Der Anstrich ist längs der Schnittränder teilweise oder ganz in breiten Streifen abgeplatzt und/oder der Anstrich ist von einzelnen Teilstücken ganz oder teilweise abgeplatzt; abgeplatzte Fläche etwa 35% der Teilstücke. |
| B 1 | Der Anstrich ist längs der Schnittränder in breiten Streifen und/oder von einzelnen Teilstücken ganz oder teilweise abgeplatzt; abgeplatzte Fläche etwa 65% der Teilstücke. |
| B 0 | Abgeplatzte Fläche mehr als 65% der Teilstücke. |

### Bestimmung der Mikroritzhärte

Die Oberflächenhärte wurde mit einem modifizierten Mikrohärteprüfgerät der Fa. E. Leitz Wetzlar GmbH gerüft. Ein Vickers-Diamant wird über einen kleinen Auflageteller, der mit einem bestimmten Gewicht beladen ist, langsam auf die Oberfläche abgesenkt und anschließend der Probentisch mit konstanter Geschwindigkeit unter der Diamantspitze weggezogen. Man gibt nach Beobachtung mit dem Mikroskop das Auflagengewicht an, mit dem gerade noch eine sichtbare Kratzspur erkennbar ist.

### Bestimmung der Abriebfestigkeit (DIN 52347)

Diese Verschleißprüfung nach dem Reibradverfahren dient zur Prüfung des Verhaltens von Glas, durchsichtigem Kunststoff und Beschichtungssystemen gegen Gleitverschleiß. Die Prüfung wird an ebenen Flächen durchgeführt. Als Meßgröße dient die Zunahme des Streulichtes. Die Probe wird, auf dem Drehteller des Verschleiß-Prüfgerätes (Teledyne Taber Abraser, Modell 503; Fa. ErichsenI liegend, durch zwei sich in entgegengesetzter Richtung drehende Reibräder (Typ CS 10 F; Fa. Teledyne Taber), auf Gleitverschleiß beansprucht (s. Abbildung). Die Reibräder bestehen aus einem definierten feinkörnigen Schleifmittel (Al₂0₃), das in Gummi eingebettet ist. Das Auflagegewicht beträgt 500 g. Die Anzahl der Umdrehungen des Drehtellers ist in den jeweiligen Tabellen abgegeben.

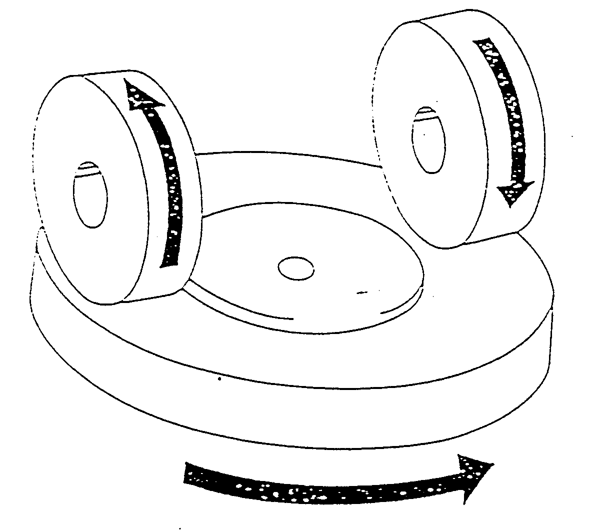

Als Meßgröße für den Verschleiß dient die Zunahme der Streuung des transmittierten Lichtes, die durch die Oberflächenveränderungen während des Verschleißversuches bedingt ist. Sie ist zu messen als Grad der gestreuten Transmission t_{d} oder als Trübung T_{d}. Als Streulichtmeßgerät wurde ein Hazegard System XL-211 der Fa. Pacific Scientific verwendet.

### d) Bewertung der Spülmaschinenfestigkeit

Für die Beurteilung der Spülmaschinenfestigkeit stand eine Haushalts-Spülmaschine der Fa. Miele (Type: Geschirrspüler G 570) sowie ein Test-Geschirrspüler Fa. Miele, Typ: Sondermaschine G 540 Spezial) zur Verfügung. Das Spülprogramm Universal 65° C von G 570 entspricht Programm 3 von G 540 Spezial: Vorspülen, Reinigen (65%), Zwischenspülen, Klarspülen (65%), Trocknen. Die verwendeten Spülzusätze sind handelsübliche Reiniger (z.B. Klarspüler (z.B. Somat). In der Testspülmaschine können mehrere Spülzyklen automatisch ablaufen. Die Zugabe des Reinigers erfolgt über einen Vorratsbehälter mit Dosiervorrichtung. Nach jedem Spülzyklus öffnet sich die Tür automatisch, es erfolgt eine 30-minütige Stillstandsphase, danach schließt sich die Tür und die Maschine läuft wieder an. Die Spülzyklen für die beschichteten Kelchböden sind in Tabelle 2 angegeben. Die beschichteten Kelchböden werden nach diesem Test bezüglich Optik (Änderung der optischen Eigenschaften, z.B. Eintrübung, Rißbildung oder Ablösen der Schicht) und Haftfestigkeit im Tesafilm-Abrißtest bewertet.

### Bestimmung der Bleilässigkeit

Die Bestimmung der Bleilässigkeit nach DIN 51031 wurde mittels üblicher analytischer Methoden bestimmt.

Die aufgesprühten und temperaturbehandelten Schichten sind absolut farblos, hochtransparent, haben eine sehr glatte und glänzende Oberfläche und zeigen eine gute Primärhaftung (Tape Test B 5 bis 4) auf den Bleikristallglasoberflächen. Das Beschichtungssystem zeigt eine ausgezeichnete Abriebbeständigkeit (1% Trübungszunahme nach 100 Abriebzyklen) und hohe Werte bei der Bestimmung der Ritzhärte (7 g).

### Tabelle 1

zeigt den Vergleich der Bleilässigkeit erfindungsgemäß beschichteter Bleikristallschalen mit unbehandelten, säurepolierten, Ammoniumsulfat-behandelten und mit Acephob (marktübliches System der Fa. Aachener Chemische Werke) beschichteten Glasschalen. Danach kann das Auslösen von Blei durch Säurepolitur der Glasoberfläche ca. um das fünffache reduziert werden. Ähnliche Ergebnisse (50 bis 60 ppb) werden durch die Ammoniumsulfat-Behandlung erzielt. Mit den kommerziellen Silikonsystemen ist eine weitere Verbesserung der Sperrwirkung für Bleiionen (ca. 10 ppb) möglich. Die erfindungsgemäß beschichteten Gläser weisen dagegen eine nahezu um den Faktor 5 reduzierte Bleilässigkeit auf. Hier liegt die Bleilässigkeit mit 2 bis 3 ppb an der Nachweisgrenze.

**Tabelle 1**

| **Bestimmung der Bleilässigkeit nach DIN 51 031 von unterschiedlich behandelten Bleikristallschalen** | | | |
|---|---|---|---|
| Behandlungsmethode | Volumen randvoll | Extraktiionsvolumen | Bleilässigkeit |
| Kelchglas 1 | 160 ml | 155 ml | 0,240 mg Pb/l |
| Kelchglas 2 | 160 ml | 155 ml | 0,250 mg Pb/l |

| Säurepolitur | | | |
|---|---|---|---|
| Schale 1 | 420 ml | 360 ml | 0,047 mg Pb/l |
| Schale 2 | 420 ml | 360 ml | 0,047 mg Pb/l |
| Schale 3 | 420 ml | 360 ml | 0,052 mg Pb/l |

| Ammonium-Sulfat-Behandlung | | | |
|---|---|---|---|
| Schale 1 | 430 ml | 370 ml | 0,061 mg Pb/l |
| Schale 2 | 430 ml | 370 ml | 0,057 mg Pb/l |
| Schale 3 | 430 ml | 370 ml | 0,059 mg Pb/l |

| Acephob-Beschichtung | | | |
|---|---|---|---|
| Schale 1 | 440 ml | 380 ml | 0,012 mg Pb/l |
| Schale 2 | 440 ml | 380 ml | 0,010 mg Pb/l |
| Schale 3 | 440 ml | 380 ml | 0,010 mg Pb/l |

| Erfindungsgemäße Beschichtung | | | |
|---|---|---|---|
| Schale 1 | 430 ml | 370 ml | 0,002 mg Pb/l |
| Schale 2 | 430 ml | 370 ml | 0,002 mg Pb/l |
| Schale 3 | 430 ml | 370 ml | 0,003 mg Pb/l |

### Tabelle 2

zeigt die Diffussionsbarrierewirkung vor und nach Auslaugen in der Spülmaschine für unbehandelte und erfindungsgemäß beschichtete Bleikristallgläser. Bis ca. 50 Spülungen bleiben die ausgezeichneten Barriereeigenschaften der erfindungsgemäßen Schichten konstant. Auch nach ca. 100-maligem Spülen weisen die untersuchten Schichten mit 10 bis 20 ppb noch eine beachtliche Sperrwirkung auf. Säurepolierte und siliconbeschichtete Bleikristallglassubstrate erreichen bereits nach 25 Spülmaschinenzyklen wieder die Bleilässigkeitswerte von unbehandelten Gläsern, mit Ammonium-Sulfat behandelte Gläser nach ca. 50 Spülungen (nicht in der Tabelle aufgeführt).

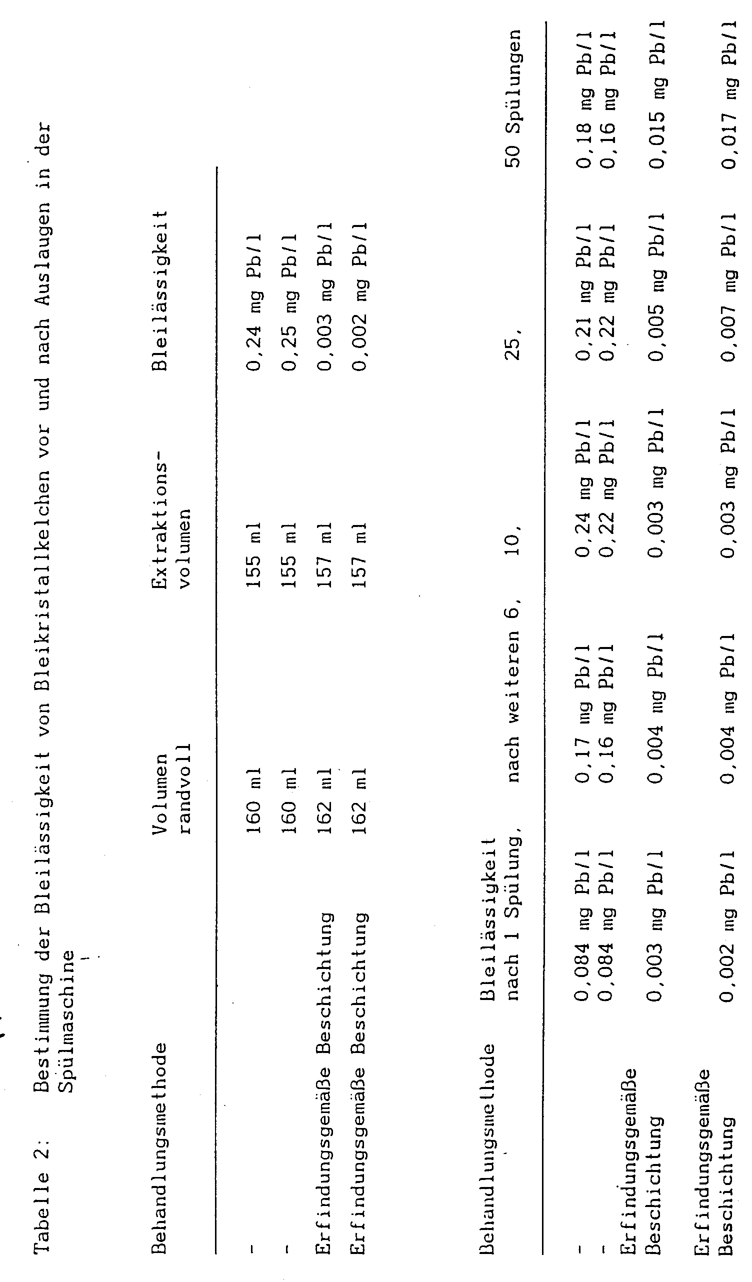

### Tabelle 3

zeigt die Messungen bezüglich lebensmittelrechtlicher Gesichtspunkte. Beschichtungen, welche auf Lebensmittelbedarfsgegenstände aufgebracht werden, müssen vor allem, wenn sie, wie im Falle der Innenbeschichtung, direkt mit Lebensmitteln in Berührung kommen - toxikologisch - unbedenklich sein. Deshalb wurden die erfindungsgemäßen Schichten nach lebensmittelrechtlichen Gesichtspunkten geprüft. Die Auswahl der Testbedingungen erfolgte unter Berücksichtigung der Empfehlung XL der Kunststoff-Kommission des Bundesgesundheitsamtes sowie der ergänzenden Mitteilungen zur Untersuchung von Kunststoffen (16., 17. und 46. Mitteilung) und der Richtlinie des Rates vom 19. September 1985 (85/572/EWG). Außerdem wurde die Migration in n-Heptan in Anlehnung an § 175.300 der US FDA Regulations bestimmt. Beschichtete Gläser wurden unter Testbedingungen mit wäßrigen und nichtwäßrigen Lösungsmitteln in Berührung gebracht, die geeignet sind, den Einfluß von Lebensmitteln zu simulieren.

Die Trockenrückstände der Migrate stellen die insgesamt aus der Oberfläche migrierenden Stoffmengen dar. Gemäß den Mitteilungen der Kunststoff-Kommission wurden die organischen Anteile der Trockenrückstände als chloroformlösliche Anteile ermittelt. Die qualitative und quantitative Untersuchung der Migrate auf organisch gebundenen Stickstoff, Phenol, Formaldehyd, primäre aaromatische Amine und Schwermetalle erfolgte entsprechend den Anforderungen der Empfehlung XL der Kunststoff-Kommission des Bundesgesundheitsamtes. Die sensorische Prüfung wurde in Anlehnung an DIN 10959 durchgeführt. Mehrere geschulte Prüfpersonen beurteilten unabhängig von einander im Dreiecktest besonders geschmacksempfindliche Testlösungen, welche mit den Beschichtungen in einem Verhältnis von 1 cm² Oberfläche zu 2 ml und 2 cm² zu 1 ml Prüflösung unter verschiedenen Zeit-Temperatur-Bedingungen in Kontakt waren gegenüber Lösungen, die nicht mit den Prüfkörpern in Berührung waren.

Die Untersuchungsergebnisse sind in Tabelle 3 zusammengestellt. Die Trockenrückstände der Migrate liegen sowohl hinsichtlich der Gesamtrückstände als auch hinsichtlich der chloroformlöslichen Anteile tief und unterhalb der Grenzen, diein der Empfehlung XL der Kunststoff-Kommission des Bundesgesundheitsamtes als zulässig angegeben sind. Sie liegen auch erheblich unter den zugelassenen Grenzwerten von § 175.300 der US FDA Regulations für Kunstharzüberzüge. Die Untersuchung der Migrate ergab, daß die in der Empfehlung XL der Kunststoff-Kommission festgesetzten Werte unterschritten sind. Bei der sensorischen Prüfung zeigten sich keine geruchlichen und geschmacklichen Abweichungen. An die Prüfungslösungen wurden keine Trübungsstoffe abgegeben. Die erfindungsgemäßen Beschichtungen erfüllen nach diesen Ergebnissen die Anforderungen, die nach § 31 Abs. 1 des deutschen Lebensmittel- und Bedarfsgegenständegesetzes zu stellen sind.

| b) Untersuchung der Migrate 2 h 70 °C | | |
|---|---|---|
| mögliche Inhaltsstoffe | Testmedien | Anteil |
| org. geb. Stickstoff | dest. Wasser | 0,04 mg/100 cm² |
| | 3 % Essigsäure | 0,05 mg/100 cm² |
| | 15 % Ethanol | 0,05 mg/100 cm² |
| Phenol | dest. Wasser | nicht nachweisbar |
| | 3 % Essigsäure | nicht nachweisbar |
| Formaldehyd | dest. Wasser | 0,01 mg/100 cm² |
| | 3 % Essigsäure | 0,02 mg/100 cm² |
| prim. aromat. Amine | dest. Wasser | nicht nachweisbar |
| | 3 % Essigsäure | nicht nachweisbar |
| Blei, Kupfer, Cadmium | dest. Wasser | nicht nachweisbar |
| | 3 % Essigsäure | nicht nachweisbar |
| Zink | dest. Wasser | nicht nachweisbar |
| | 3 % Essigsäure | nicht nachweisbar |

| c) Sensorische Prüfung (1 cm² : 2 ml/2 cm² : 1 ml) | | | | |
|---|---|---|---|---|
| Testmedien | Testbedingungen | Aussehen | Geruch | Geschmack |
| Leitungswasser | 2 h 70 °C | 0/0 | 0/0 | 0/0 |
| | 10 d 40 °C | 0/0 | 0/0 | 0/0 |
| Mineralwasser | 10 d 40 °C | 0/0 | 0/0 | 0/0 |
| 0 = keine bedenkliche Abweichung wahrnehmbar | | | | |

## Patentansprüche

1. Verfahren zur Reduzierung der Bleilässigkeit von Bleikristallglas,
dadurch **gekennzeichnet,**
daß auf das Bleikristallglas ein hydrolytisches Kondensationsprodukt aus einem vernetzbaren organofunktionellen Silan, einer Metallverbindung und einem mit diesem hydrolytischen Kondensat vernetzbaren organischen Präpolymer aufgebracht wird.

2. Verfahren nach Anspruch 1,
dadurch gekennzeichnet, daß das Aufbringen mittels für Naßlacke üblichen Auftragsverfahren erfolgt, inbesondere durch Sprühen, Tauchen, oder Schleudern.

3. Verfahren nach Anspruch 1 oder 2,
dadurch gekennzeichnet, daß die Beschichtung in einem Temperaturbereich von 100 bis 250 °C ausgehärtet wird.

4. Verfahren nach mindestens einem der Ansprüche 1 bis 3,
dadurch gekennzeichnet, daß eine Dicke der Beschichtung im Bereich von 1 bis 50 µm eingestellt wird.

## Claims

1. A process for reducing lead migration from lead crystal glass, characterized in that a hydrolytic condensation product of a cross-linkable organo-functional silane, a metal compound and an organic pre-polymer which can cross-link with this hydrolytic condensate is applied to the lead crystal glass.

2. A process according to claim 1, characterized in that the application is effected by means of methods of application customary for wet lacquers, especially by spraying, dipping or spinning.

3. A process according to claim 1 or 2, characterized in that the coating is cured in a temperature range from 100 to 250° C.

4. A process according to any of claims 1 to 3, characterized in that the thickness of the coating is established in the range from 1 to 50 µm.

## Revendications

1. Procédé de réduction de la migration du plomb du verre cristal au plomb,
caractérisé en ce qu'
on applique sur le cristal au plomb un produit de condensation hydrolytique composé d'un silane organofonctionnel réticulable, d'un composé métallique et d'un prépolymère organique réticulable avec ce condensat hydrolytique.

2. Procédé selon la revendication 1,
caractérisé en ce que
l'application a lieu au moyen de procédés d'application usuels pour des vernis humides, en particulier par pulvérisation, immersion ou centrifugation.

3. Procédé selon les revendications 1 ou 2,
caractérisé en ce que
l'enduit est durci dans une plage de température de 100 à 250°C.

4. Procédé selon au moins une des revendications 1 à 3,
caractérisé en ce qu'
on ajoute une épaisseur de l'enduit dans la zone de 1 à 50 µm.
